# EUROPEAN PATENT APPLICATION

(11) **EP 4 604 564 A1**
(43) Date of publication of application: **20.08.2025**
(21) Application number: 23876611.7
(22) Date of filing: 08.10.2023
(51) Int. Cl.: H04N 23/62

(54) **IMAGE PREVIEW METHOD AND APPARATUS, AND ELECTRONIC DEVICE AND STORAGE MEDIUM**

(30) Priority: 10.10.2022 CN 202211236048
(71) Applicant: DOUYIN VISION CO., LTD., Beijing 100041 (CN)
(72) Inventor: MA, Xiaotong, Beijing 100028 (CN)
(74) Representative: Marks & Clerk LLP
(86) International application number: PCT/CN2023/123364
(87) International publication number: WO 2024/078409

(57) **Abstract**

Embodiments of the present disclosure provide an image preview method and apparatus, an electronic device, and a storage medium. A camera view finding frame page is launched in response to a camera starting instruction, the camera view finding frame page including a first interface component therein; where the first interface component provides an interactive entrance of a media database; based on the first interface component, a corresponding preview image is displayed, where the first interface component dynamically presents at least two frames of preview images during a first time period, the preview images being generated based on media data in the media database. Since the first interface component capable of dynamically presenting preview images is provided in the camera view finding frame page, the camera view finding frame page can dynamically present the content in the media database while realizing camera view finding, so that a user can simultaneously preview a result of capturing media data in real time and a result of loading existing media data by observing the camera view finding frame page.

## Description

### CROSS-REFERENCE TO RELATED APPLICATIONS

This application claims priority to Chinese Patent Application No. 202211236048.3, filed on October 10, 2022, **and entitled** "IMAGE PREVIEW METHOD AND APPARATUS, ELECTRONIC DEVICE, AND STORAGE MEDIUM", which is hereby incorporated by reference in its entirety.

### TECHNICAL FIELD

Embodiments of the present disclosure relate to the field of Internet technologies, and more particularly, to an image preview method and apparatus, an electronic device, and a storage medium.

### BACKGROUND

Currently, content-creation applications, taking short video applications (Application) as an example, are widely enjoyed by users for rich and diversified content. Media data such as videos and images are main content presentation forms.

In the prior art, in a client corresponding to a content-creation application, a camera view finding frame page can be called up to perform media data capturing by triggering a camera control, or a media database page can be called up to load existing media data by triggering a media database control, and finally, output media data for editing and uploading to the content-creation application is obtained.

### SUMMARY

Embodiments of the present disclosure provide an image preview method and apparatus, an electronic device, and a storage medium.

In a first aspect, an embodiment of the present disclosure provides an image preview method, including:
in response to a camera starting instruction, launching a camera view finding frame page, where the camera view finding frame page includes a first interface component therein, and the first interface component provides an interactive entrance to a media database; and presenting a corresponding preview image based on the first interface component to guide a user to enter the interactive entrance; where the first interface component dynamically presents at least two frames of preview images during a first time period, and the preview images are generated based on media data in the media database.

In a second aspect, an embodiment of the present disclosure provides an image preview apparatus, including:
a starting module, configured to, in response to a camera starting instruction, launch a camera view finding frame page, where the camera view finding frame page includes a first interface component therein, and the first interface component provides an interactive entrance to a media database; and
a displaying module, configured to present a corresponding preview image based on the first interface component to guide a user to enter the interactive entrance;
where the first interface component presents at least two frames of preview images during a first time period, and the preview images are generated based on media data in the media database.

In a third aspect, an embodiment of the present disclosure provides an electronic device, including:
a processor, and a memory communicatively connected to the processor;
where the memory stores a computer execution instruction; and
the processor executes the computer execution instruction stored in the memory to implement the image preview method as described above in the first aspect and various possible designs of the first aspect.

In a fourth aspect, an embodiment of the present disclosure provides a computer-readable storage medium, where the computer-readable storage medium has stored therein a computer execution instruction, and when the computer execution instruction is executed by a processor, the image preview method as described above in the first aspect and various possible designs of the first aspect is implemented.

In a fifth aspect, an embodiment of the present disclosure provides a computer program product including a computer program, and when the computer program is executed by a processor, the image preview method as described above in the first aspect and various possible designs of the first aspect is implemented.

In a sixth aspect, an embodiment of the present disclosure provides a computer program, the computer program is used to implement the image preview method as described above in the first aspect and various possible designs of the first aspect.

The embodiments of the present disclosure provide an image preview method and apparatus, an electronic device, and a storage medium. A camera view finding frame page is launched in response to a camera starting instruction, the camera view finding frame page including a first interface component therein; the first interface component provides an interactive entrance of the media database; based on the first interface component, a corresponding preview image is presented to guide a user to enter the interactive entrance; the first interface component dynamically presents at least two frames of preview images during a first time period, and the preview images are generated based on media data in the media database. Since the first interface component capable of dynamically displaying preview images is provided in the camera view finding frame page, the camera view finding frame page can dynamically present the content in a media database while realizing camera view finding, so that a user can simultaneously preview a result of capturing media data in real time and a result of loading existing media data by observing the camera view finding frame page.

### BRIEF DESCRIPTION OF DRAWINGS

In order to explain embodiments of the present disclosure or technical solutions in the prior art more clearly, the following will briefly introduce the drawings needed in the description of the embodiments and the prior art. Obviously, the drawings in the following description are some embodiments of the present disclosure. For those of ordinary skills in the art, without involving creative efforts, other drawings can be obtained from these drawings.
FIG. 1 is an application scenario diagram of an image preview method provided by an embodiment of the present disclosure.
FIG. 2 is a schematic flowchart of uploading media data in the prior art.
FIG. 3 is a first schematic flowchart of an image preview method provided by an embodiment of the present disclosure.
FIG. 4 is a schematic diagram of a camera view finding frame page provided by an embodiment of the present disclosure.
FIG. 5 is a schematic diagram of dynamically presenting a preview image within a first interface component provided by an embodiment of the present disclosure.
FIG. 6 is a schematic diagram of another camera view finding frame page provided by an embodiment of the present disclosure.
FIG. 7 is a schematic diagram of generating a special-effect image provided by an embodiment of the present disclosure.
FIG. 8 is a second schematic flowchart of an image preview method provided by an embodiment of the present disclosure.
FIG. 9 is a schematic diagram of a process for loading output media data provided by an embodiment of the present disclosure.
FIG. 10 is a block diagram of a structure of an image preview apparatus provided by an embodiment of the present disclosure.
FIG. 11 is a schematic diagram of a structure of an electronic device provided by an embodiment of the present disclosure.
FIG. 12 is a schematic diagram of a hardware structure of an electronic device provided by an embodiment of the present disclosure.

### DESCRIPTION OF EMBODIMENTS

To make the objects, technical solutions, and advantages of the embodiments of the present disclosure clearer, the technical solutions in the embodiments of the present disclosure will be clearly and completely described below in conjunction with the accompanying drawings in the embodiments of the present disclosure. Obviously, the described embodiments are only a part of the embodiments of the present disclosure, rather than all the embodiments. Based on the embodiments of the present disclosure, all other embodiments obtained by one of ordinary skills in the art without involving any inventive efforts are within the scope of protection of the present disclosure.

An application scenario of an embodiment of the present disclosure is explained below.

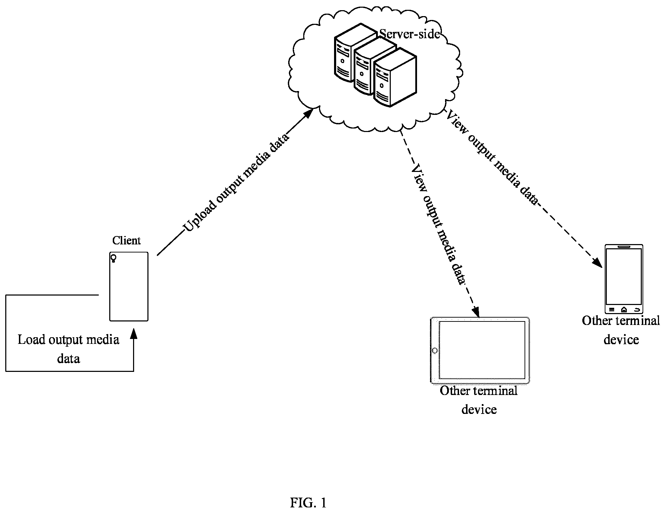

FIG. 1 is an application scenario diagram of an image preview method provided by an embodiment of the present disclosure. The image preview method provided by the embodiment of the present disclosure may be applied to a scenario of uploading media data to a content-creation application based on a terminal device, and more specifically, may be applied to an application scenario of loading output media data, where the output media data is the media data used for subsequent editing and uploading to the content-creation application. As shown in FIG. 1, the embodiment of the present disclosure provides a method that may be applied to a terminal device, such as a smartphone. Illustratively, the content-creation application refers to an application platform to which a user can upload self-made media data such as images, videos, texts, etc., and more specifically, for example, a short video application, a video website application and the like; at the same time, other applications with the function for a user to upload media data also fall within the scope of the content-creation application, for example, a social communication application, a news application and the like which can allow an individual user to upload media data. The content-creation application includes a server end and a client, where the client runs on the side of a terminal device, and a user, by operating the terminal device, loads output media data by using the client, and then edits and uploads the output media data to the server-end to complete the upload of the content created by the user. Other terminal devices can see the output media data, such as self-made videos, pictures, etc. of the user, by running a client of the content-creation application.

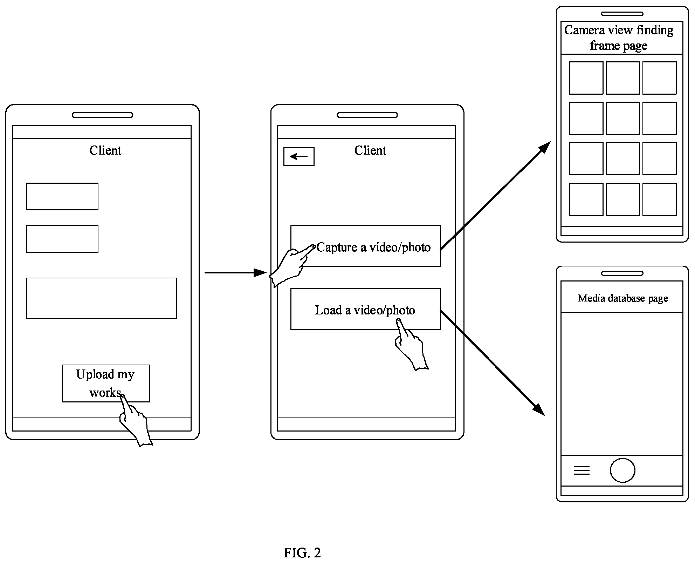

In the prior art, a trigger control for uploading media data corresponding to the self-made content is provided in a client of a content-creation application. When a user clicks the trigger control, the client will display a corresponding uploading flow page to guide the user to upload the media data. FIG. 2 is a schematic diagram of a flowchart of uploading media data in the prior art. As shown in FIG. 2, for example, after a user clicks a trigger control of "uploading my works" in a client, two controls of "capturing a video/photo" and "loading a video/photo" are displayed in a newly popped-up page to guide subsequent operations of the user; after the user clicks "capturing a video/photo", the client starts a camera view finding frame page to perform capturing and view finding, and based on a capturing operation of the user, performs video or photo capturing to generate the output media data; after the user clicks "loading a video/photo", the client starts a media database page to present a video and/or photo stored in a local media database in the terminal device or a cloud media database, and obtains the output media data based on a user's clicking operation.

However, in a practical application process, under an application scenario where a user performs content-creation, the process of the user performing content-creation is subjective and complicated; on the one hand, in the process of the user performing capturing and view finding through a camera view finding frame page, the user needs to observe whether the visual effect of an image presented in the view finding frame satisfies the requirements, whether the light is sufficient, whether there is an occluder, etc. and then decides whether to perform capturing; on the other hand, since there is more than one set of media data stored in the media database, the user is required to observe the content in the media database, and then selecting and loading can be performed. That is, the user needs to decide, based on a specific observation result, whether to open a camera view finding frame page to obtain media data in a manner of "capturing in real time" or to open a media database page to obtain media data in a manner of "loading existing media data". However, the solution in the prior art can only open either a camera view finding frame page or a media database page, but cannot simultaneously achieve the simultaneous preview of both the camera view finding frame effect and the media database content. Therefore, it can only repeatedly switch between opening the camera view finding frame page and the media database page to respectively preview the camera view finding frame effect and the media database content, resulting in the problem of increasing the time consumption for acquiring the output media data and affecting the creation efficiency of a user. An embodiment of the present disclosure provides an image preview method to solve the above problems.

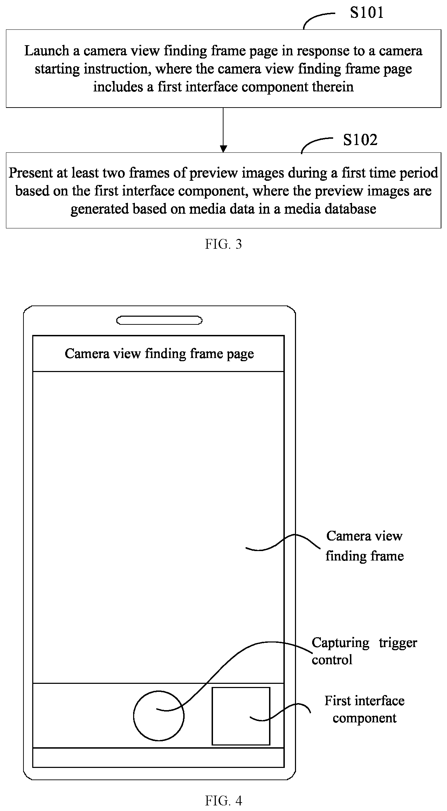

Referring to FIG. 3, FIG. 3 is a first schematic flowchart of an image preview method provided by an embodiment of the present disclosure. The method of the present embodiment may be applied in a terminal device, and the image preview method includes:
Step S101: launch a camera view finding frame page in response to a camera starting instruction, where the camera view finding frame page includes a first interface component therein.

Illustratively, an execution subject of the method of the present embodiment is a terminal device, and more specifically, for example, a smart phone. A client of a content-creation application (hereinafter referred to as the client) runs in the terminal device, where a camera control for triggering a camera starting instruction is provided in the client. When a user triggers the camera control by operating the terminal device, a corresponding camera starting instruction is generated; and then, in response to the camera starting instruction, a camera view finding frame page is started in the client. FIG. 4 is a schematic diagram of a camera view finding frame page provided by an embodiment of the present disclosure. As shown in FIG. 4, illustratively, a camera view finding frame located in the middle part of the camera view finding frame page and a capturing trigger control located in the lower part of the camera view finding frame are included in the camera view finding frame page. The capturing trigger control is configured to control a terminal device to capture a video or a picture. The camera view finding frame and the capturing trigger control in the above-mentioned camera view finding frame page are common functional units in a camera view finding frame page in the prior art, and the implementation principle will not be described in detail.

Further, in a first target position of the camera view finding frame page, for example to the right side of the capturing trigger control in FIG. 4, a first interface component is also provided. The first interface component provides an interactive entrance to a media database, and the first interface component is configured to present the media data in the media database page in a form of a preview image. Among other things, the first interface component may be provided at other target positions in addition to the position shown in FIG. 4, which is not limited here. It can be specifically provided as required. Further, the first interface component may be one or more components. When the first interface component includes multiple components, the multiple components may be arranged in adjacent positions to facilitate the user's observation, and the specific positions are not limited and will not be described in detail.

Step S102: present at least two frames of preview images during a first time period based on the first interface component, where the preview images are generated based on media data in a media database.

Illustratively, the camera view finding frame page is launched, and a preview image is dynamically presented via a first interface component. The preview image is dynamically presented at the first interface component, i.e. at least two frames of preview images are presented in a switched display manner during a first time period. The preview images are generated based on the media data in the media database. For example, after the target media data in the media database is determined, down-sampling is performed on the target media data in the media database, and then the generated thumbnails are taken as the preview images. The target media data may be determined randomly or based on a certain rule.

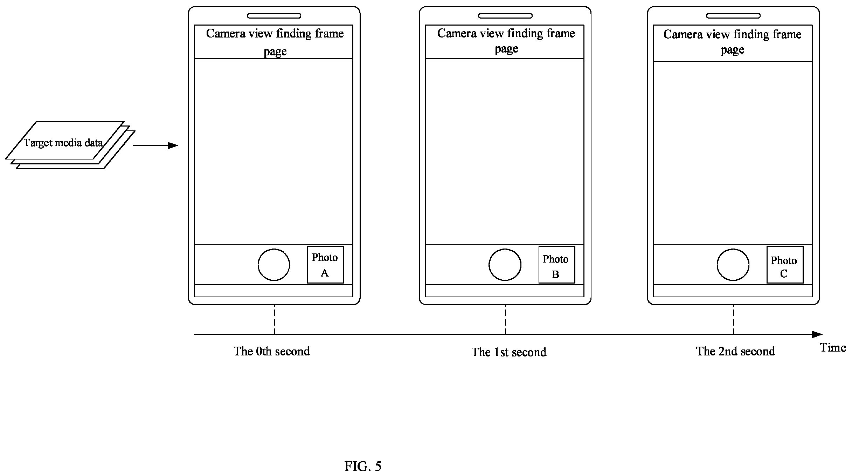

Further, the media data includes a video and a picture. When the media data is the video, at least two video frames, such as two adjacent key frames, may be selected from the video, processed and presented as corresponding preview images in the first interface component. FIG. 5 is a schematic diagram of dynamically presenting preview images within a first interface component provided by an embodiment of the present disclosure. As shown in FIG. 5, a camera view finding frame page is launched. Under a condition that a terminal device acquires user authorization, the terminal device reads media data in a media database. The media database may be a local media database or a cloud media database. At least two pieces of target media data are selected therefrom, for example, three photos (shown as photo A, photo B, and photo C); the three photos are then respectively switched to be displayed in the first interface component during the first time period, e.g. 2 seconds, i.e. photo A is displayed at the 0th second, photo B at the 1st second, and photo C at the 2nd second. This allows the user to observe preview images of three photos in the media database within 3 seconds while observing the camera view finding frame page. Illustratively, the first time period is determined by the number of preview images, or the number of preview images is determined by a preset first time period.

Thereafter, optionally, the user can, based on the observed preview images in the first page component, decide to use the media data in the media database page corresponding to a preview image as the output media data for loading, or directly generate the output media data for loading by capturing in real time directly through the camera view finding frame. Therefore, it is achieved that the output media data is easily and quickly loaded to perform subsequent steps of editing and uploading the output media data.

In the present embodiment, a camera view finding frame page is launched in response to a camera starting instruction, where the camera view finding frame page includes a first interface component therein; and at least two frames of preview images are presented during the first time period based on the first interface component, where the preview images are generated based on the media data in the media database. Since the first interface component capable of dynamically displaying preview images is provided in the camera view finding frame page, the camera view finding frame page can dynamically present the content in a media database while realizing camera view finding, so that a user can simultaneously preview a result of capturing media data in real time and a result of loading existing media data by observing the camera view finding frame page, thereby helping the user to make a decision quickly without requiring the user to open the camera view finding frame page and the media database page respectively and perform an attempt and a search respectively, and thus simplifying operation steps and improving interaction efficiency, and improving the generation speed of the output media data that is ultimately used for uploading to a content-creation application.

Based on the embodiment shown in FIG. 3, further, in a possible implementation mode, the camera view finding frame page further includes a second interface component. The second interface component is configured to present a target visual special effect added to the preview images. The method provided in the present embodiment further includes: generating special-effect images corresponding to the preview images based on the target visual special effect presented by the second interface component.

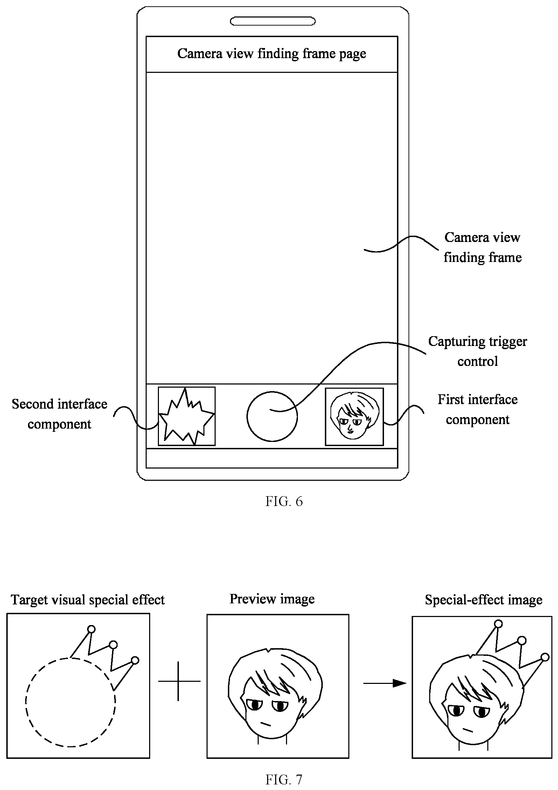

FIG. 6 is a schematic diagram of another camera view finding frame page provided by an embodiment of the present disclosure. As shown in FIG. 6, at a second target position of the camera view finding frame page, a second interface component is provided for presenting a target visual special effect added to the preview images, more specifically, for example, a skin beautifying effect, a sticker effect, etc. In a possible implementation mode, a second interface component changes a target visual special effect presented by the second interface component in response to a user instruction. For example, after a user clicks on the second interface component, a plurality of visual special effects to choose from are popped-up and displayed, and then one of the visual special effects is used as a target visual special effect based on a selection operation of the user on the visual special effect.

Further, based on the target visual special effect presented by the second interface component, the terminal device renders the preview images corresponding to the first interface component based on the target visual special effect, so as to generate images with the target visual special effect, namely, special-effect images. FIG. 7 is a schematic diagram of generating a special-effect image provided by an embodiment of the present disclosure. As shown in FIG. 7, illustratively, a target visual special effect presented by the second interface component is a sticker effect of adding a virtual adornment (such as a crown shown in the figure) to a user head portrait; a preview image corresponding to the first interface component, namely, a preview image generated from target media data in a media database, is a photo containing the user head portrait, then after rendering the preview image based on the target visual special effect, the generated special-effect image is: a photo containing a head portrait of a user with a virtual adornment.

Accordingly, based on the above-mentioned implementation mode, the specific implementation method of step S102 includes: based on the first interface component, presenting special-effect images corresponding to the at least two frames of preview images respectively during the first time period.

In this embodiment, based on providing the first interface component in the camera view finding frame page, a second interface component for displaying a visual special effect of the preview images is further added; a target visual special effect is displayed and set via the second interface component, so that the first interface component can display preview images with a corresponding visual special effect added; therefore, a user can further observe the effect of adding the visual special effect to the media data in the media database by observing the camera view finding frame page; this helps the user to decide whether to use the media data in the media database page to generate the final output media data to execute subsequent steps of editing, uploading, etc., thereby further reducing user operation steps and improving interaction efficiency, and shortening the time consumption for generating the output media data.

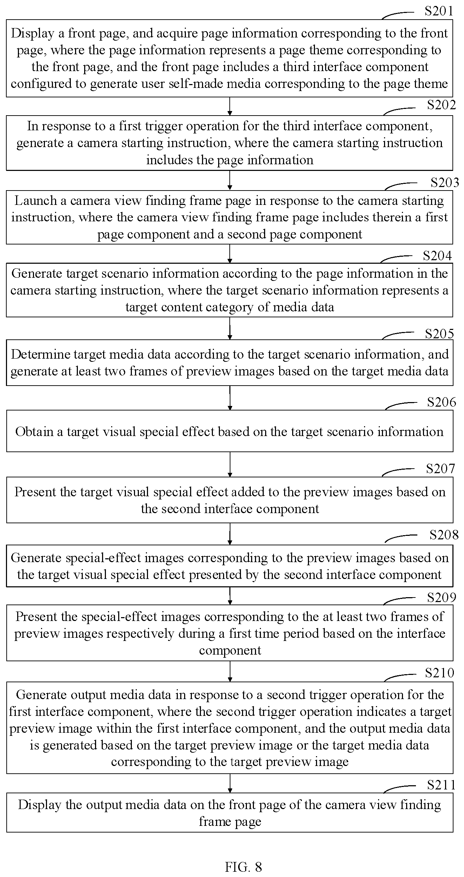

Referring to FIG. 8, FIG. 8 is a second schematic flow diagram of an image preview method provided by an embodiment of the present disclosure. This embodiment adds, based on the embodiment shown in FIG. 3, a step of determining target media data in a media database page and a step of generating output media data. The image preview method includes:
Step S201: display a front page, and acquire page information corresponding to the front page, where the page information represents a page theme corresponding to the front page, the front page includes a third interface component therein, and the third interface component is configured to generate user self-made media corresponding to the page theme.
Step S202: in response to a first trigger operation for the third interface component, generate a camera starting instruction, where the camera starting instruction includes the page information.

By way of example, the front page is a page for triggering a camera view finding frame page, and a third interface component is provided in the front page, for example, a trigger control with the name of "uploading my works" provided in the client in the embodiment shown in FIG. 2. After a user clicks the trigger control, a camera starting instruction is generated and the camera view finding frame page is directly launched, without needing to present a page containing two controls of "capturing a video/photo" and "loading a video/photo" included in the embodiment shown in FIG. 2, thereby simplifying the operation flow. For the specific implementation, reference can be made to the introduction of the embodiments corresponding to FIG. 2 and FIG. 4, which will not be repeated herein.

Furthermore, the front page is configured with corresponding page information, and the terminal device may obtain the page information corresponding to the front page through a client program. Illustratively, different front pages may correspond to different page information, and the page information represents the page theme to which the front page corresponds. For example, a front page #1 is a discussion area of an automobile section in an application, the corresponding page theme is an "automobile theme", and the page information corresponding to the front page #1 is info_1; a front page #2 is a discussion area of a tourism section in an application, the corresponding page theme is a "tourism theme", and the page information corresponding to the front page #2 is info_2. Illustratively, the page information has a fixed mapping relationship with the page theme it represents, and the mapping relationship may be pre-set. Therefore, the page information may be an abstract identification in the above example. Further, the page information may be determined by an access address of the front page. In response to the first trigger operation for the third interface component, a corresponding camera starting instruction is generated based on the page information corresponding to the front page, so that the camera starting instruction can include the page information of the front page.

Step S203: launch a camera view finding frame page in response to the camera starting instruction, where the camera view finding frame page includes therein a first interface component and a second interface component.

Step S204: generate target scenario information according to the page information in the camera starting instruction, where the target scenario information represents a target content category of media data.

Step S205: determine target media data according to the target scenario information, and generate at least two frames of preview images based on the target media data.

Illustratively, after responding to the camera starting instruction, a starting method corresponding to the camera view finding frame page is called, and initialization is performed, and the camera view finding frame page is loaded. In the initialization phase, the first interface component and the second interface component in the camera view finding frame page may not load data. After the initialization phase ends, data corresponding to the first interface component and the second interface component is determined and loaded, so that the first interface component and the second interface component display the corresponding content.

Illustratively, the page information is included in the camera starting instruction, where the page information represents a page theme corresponding to the front page; and the corresponding target scenario information is obtained based on the page information and a preset mapping relationship, where the target scenario information represents a target content category of the media data, and the content category includes, for example, a vehicle, a house, a landscape, a portrait, etc. The mapping relationship between the page information and the scene information is that, for example, when the page theme of the front page represented by the page information is "automobile theme", the target content categories to which it maps are "vehicle" and "road". When the page theme of the front page represented by the page information is "tourism theme", the target content categories to which it maps are "landscape" and "portrait". The scenario information may also be represented based on an abstract identification, which can be specifically set according to needs. Since the media data can be classified by the content category of the media data represented by the scene information based on identifying the media data, for example, identifying a video and a photo about "portrait" and "landscape" in the media data, therefore, based on the target content category represented by the target scenario information, corresponding media data belonging to the target content category, namely, target media data, can be obtained, and then at least two frames of preview images are obtained according to the target media data. The specific implementation method has been introduced in the embodiment shown in FIG. 3, which will not be described in detail here.

Step S206: obtain a target visual special effect based on the target scenario information.

Step S207: present the target visual special effect added to the preview images based on the second interface component.

Illustratively, based on the target scenario information, a visual special effect matched therewith, namely, a target visual special effect, can be further determined. For example, when the target content category corresponding to the target scenario information is "landscape", a visual special effect A for adding a "halo" effect is used; when the target content category corresponding to the target scenario information is "person", then a visual special effect B for adding a "skin beautifying" effect is used; namely, through different target scenario information and a pre-set mapping relationship, a target visual special effect matched therewith can be determined. A specific implementation of the mapping relationship can be set based on specific requirements, which will not be described in detail.

Furthermore, after the target visual special effect is determined, an identification corresponding to the target visual special effect, such as a special effect icon, a special effect text, etc. is displayed in the second interface component for presenting the visual special effect so as to realize the presentation and setting of the target visual special effect, realize automatic recommendation of the visual special effect matching with the page theme, reduce user operations, and improve interaction efficiency.

Step S208: generate special-effect images corresponding to the preview images based on the target visual special effect presented by the second interface component.

Step S209: present the special-effect images corresponding to the at least two frames of preview images respectively during a first time period based on the first interface component.

Further, after the target visual special effect and the preview images are determined, rendering is performed on the preview images based on the target visual special effect, thereby generating the preview images with the visual special effect, i.e. the special-effect images. Based on the above-mentioned steps, since the target visual special effect and the preview images are determined based on the same set of target scenario information, the consistency of the target visual special effect and the preview images in the main scenario dimension can be ensured, so that the generated special-effect images are more reasonable, and they are also more similar to a result manually set and selected by an experienced user; therefore, it is more friendly to an inexperienced user, and the quality and efficiency of a work produced by a user under the condition of using the existing media data for content-creation are improved.

Further, optionally, after step S209, the following is further included:
Step S210: generate output media data in response to a second trigger operation for the first interface component, where the second trigger operation indicates a target preview image within the first interface component, and the output media data is generated based on the target preview image or the target media data corresponding to the target preview image.
Step S211: display the output media data on the front page of the camera view finding frame page.

Illustratively, since the preview image in the first interface component is dynamically changing, when the terminal device detects a second trigger operation for the first interface component at a first moment, for example, a clicking operation on the first interface component, the preview image displayed in the first interface component at the first moment is a target preview image corresponding to the second trigger operation. Then, the target media data corresponding to the target preview image, for example, a video or a photograph, is acquired, and the output media data is generated after processing steps such as compressing, adjusting the size, adding a visual special effect, etc. are performed on the target media data; alternatively, the target media data is taken as the output media data directly. Then, the client run on the terminal device returns to the front page and displays the output media data in the front page, thereby completing the process of loading the output media data. Then the output media data may then be further edited and uploaded based on specific needs, which will not be described in detail here.

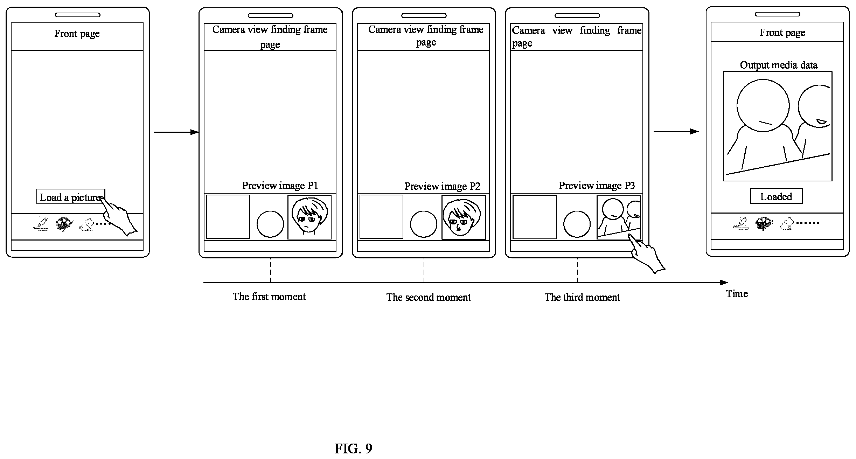

FIG. 9 is a schematic diagram of a process for loading output media data provided by an embodiment of the present disclosure. As shown in FIG. 9, illustratively, after clicking a "loading picture" button (the third interface component) on the front page, a camera view finding frame page is entered; within the camera view finding frame page, a first interface component dynamically displays multiple frames of preview images, for example, a preview image P1 is displayed in the first interface component at a first moment, a preview image P2 is displayed in the first interface component at a second moment, and a preview image P3 is displayed in the first interface component at a third moment; at the third moment, the terminal device detects a third trigger operation for the first interface component, for example, a clicking operation of a user, the terminal device automatically acquires target media data data_1 corresponding to the preview image P1, and performs visual special effect rendering on the target media data data_1 to generate media data with a visual rendering special effect, namely, the output media data, and loads the output media data and displays the same in the front page; optionally, at the same time, a word of "loaded" is displayed on the third interface component.

Since the preview images displayed by the first interface component in the step of the present embodiment is dynamically and automatically determined based on the scenario information, and is not manually selected by the user, and in the case where a visual special effect is added, it would lead to the problem that it is difficult or impossible for the user to accurately find the corresponding target media data through the media database page only by observing the preview images, thereby leading to additional time consumption in the process of loading the output media data based on the target media data, and reducing the loading efficiency of the output media data. In the step of the present embodiment, a target preview image is directly determined in response to the second trigger operation for the first interface component, and the corresponding output media data is loaded on the front page. Therefore, a user is enabled to complete the process of loading the output media data by observing a preview image displayed in the first interface component in combination with performing the second trigger operation, without needing to start a media database page to manually search and select the target media data, thereby improving the loading efficiency of the output media data and reducing time consumption.

In this embodiment, the implementation mode of step S203 is similar to the implementation mode of step S101 in the embodiment shown in FIG. 3 of the present disclosure, and for the details, reference can be made to the corresponding introduction in the embodiment shown in FIG. 3, which will not be described in detail here.

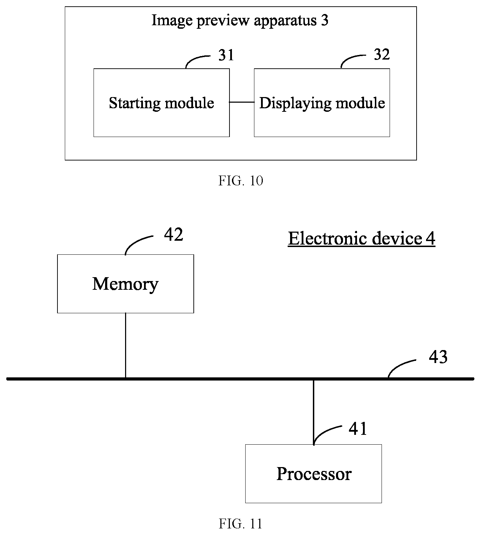

Corresponding to the image preview method of the above embodiments, FIG. 10 is a block diagram showing a structure of an image preview apparatus provided by an embodiment of the present disclosure. For ease of illustration, only portions related to embodiments of the present disclosure are shown. Referring to FIG. 10, the image preview apparatus 3 includes:
a starting module 31, configured to launch a camera view finding frame page in response to a camera starting instruction, where the camera view finding frame page includes a first interface component therein; and
a displaying module 32, configured to present at least two frames of preview images during a first time period based on the first interface component, where the preview images are generated based on media data in a media database.

In an embodiment of the present disclosure, before presenting the at least two frames of preview images, the displaying module 32 is further configured to: acquire target scenario information, where the target scenario information represents a target content category of the media data; determine target media data according to the target scenario information; and generate the at least two frames of preview images based on the target media data.

In an embodiment of the present disclosure, before launching the camera view finding frame page, the starting module 31 is further configured to: acquire page information corresponding to a front page, where the page information represents a page theme corresponding to the front page, the front page includes a third interface component therein, and the third interface component is configured to generate user self-made media corresponding to the page theme; and generate the camera starting instruction in response to a first trigger operation for the third interface component, where the camera starting instruction includes the page information; and the displaying module 32, when acquiring the target scenario information, is specifically configured to: generate the target scenario information according to the page information in the camera starting instruction.

In an embodiment of the present disclosure, the target media data includes a target video stored in the media database. The displaying module 32, when generating the at least two frames of preview images based on the target media data, is specifically configured to: acquire at least two key frames of the target video; and generate, based on the key frames, corresponding preview images.

In an embodiment of the present disclosure, the camera view finding frame page further includes a second interface component configured to present a target visual special effect added to the preview images; the displaying module 32 is further configured to generate special-effect images corresponding to the preview images based on the target visual special effect presented by the second interface component; and the displaying module 32, when presenting the at least two frames of preview images during the first time period based on the first interface component, is specifically configured to: based on the first interface component, present the special-effect images corresponding to the at least two frames of preview images respectively during the first time period.

In an embodiment of the present disclosure, the displaying module 32 is further configured to obtain a target visual special effect based on target scenario information, where the target scenario information represents a target content category of the media data; and display the target visual special effect on the second interface component.

In an embodiment of the present disclosure, the displaying module 32 is further configured to: generate output media data in response to a second trigger operation for the first interface component, where the second trigger operation indicates a target preview image in the first interface component, and the output media data is generated based on the target preview image or target media data corresponding to the target preview image; and display the output media data on a front page of the camera view finding frame page.

The starting module 31 and the displaying module 32 are connected. The image preview apparatus 3 provided in the present embodiment can execute the technical solutions of the above-mentioned method embodiments, and the implementation principles and technical effects thereof are similar, which will not be described in detail herein in the present embodiment.

FIG. 11 is a schematic diagram of a structure of an electronic device provided by an embodiment of the present disclosure. As shown in FIG. 11, the electronic device 4 includes:
a processor 41, and a memory 42 communicatively connected to the processor 41;
where the memory 42 stores a computer execution instruction; and
the processor 41 executes the computer execution instruction stored in the memory 42 to implement the image preview method in embodiments shown in FIG. 3 - FIG. 9.

Optionally, the processor 41 and the memory 42 are connected via a bus 43.

Relevant description can be understood with reference to the relevant description and effects corresponding to the steps in the embodiments corresponding to FIG. 3 - FIG. 9, which will not be repeated herein.

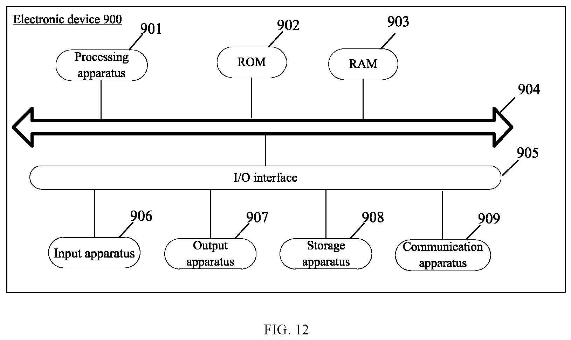

Referring to FIG. 12, a schematic diagram of a structure of an electronic device 900 suitable for implementing an embodiment of the present disclosure is shown. The electronic device 900 may be a terminal device or a server. The terminal device may include, but is not limited to, a mobile terminal such as a mobile phone, a notebook computer, a digital broadcast receiver, a personal digital assistant (Personal Digital Assistant, PDA), a portable android device (Portable Android Device, PAD), a portable media player (Portable Media Player, PMP), a vehicle-mounted terminal (e.g. a vehicle-mounted navigation terminal), and the like, and a fixed terminal such as a digital television (Television, TV), a desktop computer, and the like. The electronic device shown in FIG. 12 is only an example and should not impose any limitation on the function and scope of use of the embodiments of the present disclosure.

As shown in FIG. 12, the electronic device 900 may include a processing apparatus (e.g. a central processor, a graphic processor, etc.) 901 that may execute various suitable actions and processing in accordance with a program stored in a read only memory (Read Only Memory, ROM) 902 or a program loaded from a storage apparatus 908 into a random access memory (Random Access Memory, RAM) 903. In the RAM 903, various programs and data required for the operation of the electronic device 900 are also stored. The processing apparatus 901, the ROM 902, and the RAM 903 are connected to each other via a bus 904. An input/output (input/output, I/O) interface 905 is also connected to the bus 904.

In general, the following apparatuses may be connected to the I/O interface 905: an input apparatus 906 including, for example, a touch screen, a touch pad, a keyboard, a mouse, a camera, a microphone, an accelerometer, a gyroscope, etc.; an output apparatus 907 including, for example, a liquid crystal display (Liquid Crystal Display, LCD), a speaker, a vibrator, etc.; a storage apparatus 908 including, for example, a magnetic tape, a hard disk, etc.; and a communication apparatus 909. The communication apparatus 909 may allow the electronic device 900 to communicate wirelessly or wired with other devices to exchange data. Although FIG. 12 illustrates an electronic device 900 having various apparatuses, it should be understood that not all illustrated apparatuses are required to be implemented or provided. More or fewer apparatuses may alternatively be implemented or provided.

In particular, processes described above with reference to flow diagrams may be implemented as computer software programs in accordance with the embodiments of the present disclosure. For example, an embodiment of the present disclosure includes a computer program product including a computer program carried on a computer-readable medium, the computer program including program code for executing the method illustrated in the flow diagram. In such embodiments, the computer program may be downloaded and installed from a network via the communication apparatus 909, or installed from the storage apparatus 908, or installed from the ROM 902. When the computer program is executed by the processing apparatus 901, the above functions defined in the method of an embodiment of the present disclosure is executed.

It needs to be noted that the computer-readable medium described above in the present disclosure may be a computer-readable signal medium or a computer-readable storage medium or any combination of the two. The computer-readable storage medium may be, for example, but not limited to, an electronic, magnetic, optical, electromagnetic, infrared, or semiconductor system, apparatus, or component, or a combination of any of the foregoing. More specific examples of the computer-readable storage medium may include, but are not limited to: an electrical connection having one or more wires, a portable computer diskette, a hard disk, a random access memory (RAM), a read only memory (ROM), an erasable programmable read only memory (Erasable Programmable Read Only Memory, EPROM) or flash memory, an optical fiber, a portable compact disc read only memory (Compact Disc Read Only Memory, CD-ROM), an optical storage device, a magnetic storage device, or any suitable combination thereof. In this disclosure, the computer-readable storage medium may be any tangible medium that can contain or store a program. The program may be used by or in connection with an instruction execution system, apparatus, or device. In this disclosure, a computer-readable signal medium may include a data signal, in which computer-readable program code is carried, propagated in the baseband or as part of a carrier. Such propagated data signal may take many forms, including but not limited to an electromagnetic signal, an optical signal, or any suitable combination of the preceding. The computer-readable signal medium may also be any computer-readable medium other than the computer-readable storage medium. The computer-readable signal medium may send, propagate, or transmit a program for use by or in combination with an instruction execution system, apparatus, or device. The program code contained in the computer-readable medium may be transmitted with any appropriate medium, including but not limited to: a wire, optical cable, RF (radio frequency), etc., or any appropriate combination of the foregoing.

The computer-readable medium may be included in the electronic device, it may also exist separately and not fitted into the electronic device.

The computer-readable medium carries one or more programs which, when executed by the electronic device, cause the electronic device to execute the method shown in the embodiments described above.

The computer program code for executing the operations of the present disclosure may be written in one or more programming languages or a combination thereof. The programming languages include object-oriented programming languages such as Java, Smalltalk, C++, and conventional procedural programming languages such as "C" language or similar programming languages. The program code may be executed completely on a user computer, partially on a user computer, as one independent software package, partially on a user computer and partially on a remote computer, or completely on a remote computer or server. In the case involving a remote computer, the remote computer may be connected to a user computer through any kind of network, including a local area network (Local Area Network, LAN) or a wide area network (Wide Area Network, WAN), or may be connected to an external computer (e.g. through an Internet connection by using an Internet service provider).

The flowcharts and block diagrams in the drawings illustrate the architecture, functionality, and operation of possible implementations of a system, a method, and a computer program product according to various embodiments of the present disclosure. In this regard, each block in the flowchart or block diagram may represent a module, a program segment, or a portion of code, which contains one or more executable instructions for implementing a specified logical function. It should also be noted that in some alternative implementations, the functions noted in the blocks may occur in other order than those noted in the figures. For example, two successive blocks may in fact be executed substantially in parallel, or they may sometimes be executed in the reverse order, depending upon the functionality involved. It should also be noted that each block in the block diagrams and/or flowcharts, and the combination of blocks in the block diagrams and/or flowcharts, may be implemented by a dedicated hardware-based system that executes the specified function or operation, or may be realized by a combination of dedicated hardware and computer instructions.

The units involved in the embodiments of the present disclosure may be realized by software or hardware, where the name of a unit does not in some cases constitute a limitation on the unit itself. For example, a first acquisition unit may also be described as "a unit acquiring at least two Internet Protocol addresses".

The functions described herein above may be executed, at least in part, by one or more hardware logic parts. For example, without limitation, exemplary types of hardware logic parts that may be used include: a field programmable gate array (Field-Programmable Gate Array, FPGA), an application specific integrated circuit (Application Specific Integrated Circuit, ASIC), an application specific standard product (Application Specific Standard Parts, ASSP), a system on chip (System On Chip, SOC), a complex programmable logic device (Complex Programmable Logic Device, CPLD), etc.

In the context of this disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the preceding. More specific examples of the machine-readable storage medium may include an electrical connection based on one or more wires, a portable computer disk, a hard disk, a random access memory (RAM), a read only memory (ROM), an erasable programmable read only memory (EPROM or flash memory), an optical fiber, a portable compact disc read only memory (CD-ROM), an optical storage device, a magnetic storage device, or any suitable combination of the preceding.

In a first aspect, according to one or more embodiments of the present disclosure, there is provided an image preview method including:
launching a camera view finding frame page in response to a camera starting instruction, where the camera view finding frame page includes a first interface component therein; and presenting at least two frames of preview images during a first time period based on the first interface component, where the preview images are generated based on media data in a media database.

According to one or more embodiments of the present disclosure, before the presenting the at least two frames of preview images, the following is further included: acquiring target scenario information, where the target scenario information represents a target content category of the media data; determining target media data according to the target scenario information; and generating the at least two frames of preview images based on the target media data.

According to one or more embodiments of the present disclosure, before the launching the camera view finding frame page, the following is further included: acquiring page information corresponding to a front page, where the page information represents a page theme corresponding to the front page, the front page includes a third interface component therein, and the third interface component is configured to generate user self-made media corresponding to the page theme; and generating the camera starting instruction in response to a first trigger operation for the third interface component, where the camera starting instruction includes the page information therein; where acquiring the target scenario information includes: generating the target scenario information according to the page information in the camera starting instruction.

According to one or more embodiments of the present disclosure, the target media data includes a target video stored in the media database, and the generating the at least two frames of preview images based on the target media data includes: acquiring at least two key frames of the target video; and generating corresponding preview images based on the key frames.

According to one or more embodiments of the present disclosure, the camera view finding frame page further includes a second interface component configured to present a target visual special effect added to the preview images; the method further includes: generating special-effect images corresponding to the preview images based on the target visual special effect presented by the second interface component; the presenting the at least two frames of preview images during the first time period based on the first interface component includes: presenting the special-effect images respectively corresponding to the at least two frames of preview images in the first time period based on the first interface component.

According to one or more embodiments of the present disclosure, the method further includes: obtaining the target visual special effect based on target scenario information, where the target scenario information represents a target content category of the media data; and displaying the target visual special effect on the second interface component.

According to one or more embodiments of the present disclosure, the method further includes: generating output media data in response to a second trigger operation for the first interface component, where the second trigger operation indicates a target preview image in the first interface component, and the output media data is generated based on the target preview image or target media data corresponding to the target preview image; and displaying the output media data on a front page of the camera view finding frame page.

In a second aspect, according to one or more embodiments of the present disclosure, there is provided an image preview apparatus including:
a starting module, configured to launch a camera view finding frame page in response to a camera starting instruction, where the camera view finding frame page includes a first interface component therein; and
a displaying module, configured to present at least two frames of preview images during a first time period based on the first interface component, where the preview images are generated based on media data in a media database.

According to one or more embodiments of the present disclosure, before presenting the at least two frames of preview images, the displaying module is further configured to: acquire target scenario information, which represents a target content category of the media data; determine target media data according to the target scenario information; and generate the at least two frames of preview images based on the target media data.

According to one or more embodiments of the present disclosure, before launching the camera view finding frame page, the starting module is further configured to: acquire page information corresponding to a front page, where the page information represents a page theme corresponding to the front page, the front page includes a third interface component therein, and the third interface component is configured to generate user self-made media corresponding to the page theme; and generate the camera starting instruction in response to a first trigger operation for the third interface component, where the camera starting instruction includes the page information therein; and the displaying module is specifically configured to, when acquiring the target scenario information, generate the target scenario information according to the page information in the camera starting instruction.

According to one or more embodiments of the present disclosure, the target media data includes a target video stored in the media database, and the displaying module, when generating the at least two frames of preview images based on the target media data, is specifically configured to: acquire at least two key frames of the target video; and based on the key frames, generate corresponding preview images.

According to one or more embodiments of the present disclosure, the camera view finding frame page further includes a second interface component configured to present a target visual special effect added to the preview images; the displaying module is further configured to: generate special-effect images corresponding to the preview images based on the target visual special effect presented by the second interface component; and the displaying module, when presenting the at least two frames of preview images during the first time period based on the first interface component, is specifically configured to: present the special-effect images respectively corresponding to the at least two frames of preview images in the first time period based on the first interface component.

According to one or more embodiments of the present disclosure, the displaying module is further configured to: obtain the target visual special effect based on target scenario information, where the target scenario information represents a target content category of the media data; and display the target visual special effect on the second interface component.

According to one or more embodiments of the present disclosure, the displaying module is further configured to: generate output media data in response to a second trigger operation for the first interface component, where the second trigger operation indicates a target preview image in the first interface component, and the output media data is generated based on the target preview image or target media data corresponding to the target preview image; and display the output media data on a front page of the camera view finding frame page.

In a third aspect, according to one or more embodiments of the present disclosure, there is provided an electronic device including: a processor, and a memory communicatively connected to the processor,
where the memory stores a computer execution instruction; and
the processor executes the computer execution instruction stored in the memory to implement the image preview method as described above in the first aspect and the various possible designs of the first aspect.

In a fourth aspect, according to one or more embodiments of the present disclosure, there is provided a computer-readable storage medium having stored therein a computer execution instruction, and when the computer execution instruction is executed by a processor, the image preview method as described above in the first aspect and the various possible designs of the first aspect is implemented.

In a fifth aspect, an embodiment of the present disclosure provides a computer program product including a computer program, and when the computer program is executed by a processor, the image preview method as described above in the first aspect and the various possible designs of the first aspect is implemented.

In a sixth aspect, an embodiment of the present disclosure provides a computer program, the computer program is used to implement the image preview method as described above in the first aspect and various possible designs of the first aspect.

The above description is only preferred embodiments of the present disclosure and explanation of the applied technical principles. Those skilled in the art should understand that the disclosure scope involved in this disclosure is not limited to the technical solutions formed by a specific combination of the above technical features, but should also cover other technical solutions formed by any combination of the above technical features or equivalent features thereof without departing from the above disclosed concept. For example, a technical solution formed by replacing the above-mentioned features and the technical features having similar functions disclosed in (but not limited to) the present disclosure.

Further, while operations are depicted in a particular order, this should not be understood to require that the operations are executed in the particular order shown or in sequential order. Under certain circumstances, multitasking and parallel processing may be advantageous. Likewise, several specific implementation details have been included in the above discussion, but these should not be construed as limiting the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combination.

Although the subject matter has been described in language specific to structural features and/or method and logical acts, it should be understood that the subject matter defined in the appended claims is not necessarily limited to the specific features or acts described above. Rather, the specific features and acts described above are merely example forms for implementing the claims.

## Claims

1. An image preview method, comprising:
in response to a camera starting instruction, launching a camera view finding frame page, wherein the camera view finding frame page comprises a first interface component therein, and the first interface component provides an interactive entrance to a media database; and
presenting a corresponding preview image based on the first interface component;
wherein the first interface component dynamically presents at least two frames of preview images during a first time period, and the preview images are generated based on media data in the media database.

2. The method according to claim 1, before presenting the corresponding preview image based on the first interface component, further comprising:
acquiring target scenario information, wherein the target scenario information represents a target content category of the media data;
determining target media data according to the target scenario information; and
generating the at least two frames of preview images based on the target media data.

3. The method according to claim 2, before launching the camera view finding frame page, further comprising:
acquiring page information corresponding to a front page, wherein the page information represents a page theme corresponding to the front page, the front page comprises a third interface component therein, and the third interface component is configured to generate user self-made media corresponding to the page theme; and
generating the camera starting instruction in response to a first trigger operation for the third interface component, wherein the camera starting instruction comprises therein the page information;
wherein the acquiring the target scenario information comprises:
generating the target scenario information according to the page information in the camera starting instruction.

4. The method according to claim 2 or 3, wherein the target media data comprises a target video stored in the media database, and the generating the at least two frames of preview images based on the target media data comprises:
acquiring at least two key frames of the target video; and
generating, based on the key frames, corresponding preview images.

5. The method according to any one of claims 1 to 4, wherein the camera view finding frame page further comprises a second interface component configured to present a target visual special effect added to the preview images;
the method further comprises:
generating special-effect images corresponding to the preview images based on the target visual special effect presented by the second interface component; and
the presenting the at least two frames of preview images during the first time period based on the first interface component comprises:
presenting, based on the first interface component, the special-effect images respectively corresponding to the at least two frames of preview images in the first time period.

6. The method according to claim 5, further comprising:
obtaining, based on target scenario information, the target visual special effect, wherein the target scenario information represents a target content category of the media data; and
displaying the target visual special effect on the second interface component.

7. The method according to any one of claims 1 to 6, further comprising:
generating output media data in response to a second trigger operation for the first interface component, wherein the second trigger operation indicates a target preview image in the first interface component, and the output media data is generated based on the target preview image or target media data corresponding to the target preview image; and
displaying the output media data on a front page of the camera view finding frame page.

8. An image preview apparatus, comprising:
a starting module, configured to, in response to a camera starting instruction, launch a camera view finding frame page, wherein the camera view finding frame page comprises a first interface component therein, and the first interface component provides an interactive entrance to a media database; and
a displaying module, configured to present a corresponding preview image based on the first interface component;
wherein the first interface component presents at least two frames of preview images during a first time period, and the preview images are generated based on media data in the media database.

9. An electronic device, comprising: a processor, and a memory communicatively connected to the processor;
wherein the memory stores a computer execution instruction; and
the processor executes the computer execution instruction stored in the memory to implement the image preview method according to any one of claims 1 to 7.

10. A computer-readable storage medium, wherein the computer-readable storage medium stores therein a computer execution instruction, and when a processor executes the computer executed instruction, the image preview method according to any one of claims 1 to 7 is implemented.

11. A computer program product, comprising a computer program, wherein when the computer program is executed by a processor, the image preview method according to any one of claims 1 to 7 is implemented. 12. A computer program, wherein the computer program is used to implement the image preview method according to any one of claims 1 to 7.
